# EUROPEAN PATENT APPLICATION

(11) **EP 1 975 141 A1**
(43) Date of publication of application: **01.10.2008**
(21) Application number: 06833373.1
(22) Date of filing: 27.11.2006
(51) Int. Cl.: C05D 9/00, A01C 1/00, A01C 1/06, A01G 1/00, A01G 7/06, A01N 25/04, A01N 59/06, A01N 59/16, A01P 21/00, C05B 17/00

(54) **METHOD FOR PROMOTING PLANT GROWTH AND IMPROVING PLANT QUALITY AND GROWTH-PROMOTING AGENT AND QUALITY-IMPROVING AGENT TO BE USED IN THE METHOD**

(30) Priority: 17.01.2006 JP 2006035738
(71) Applicant: Yamada, Osamu, Toyohashi-shi Aichi 441-8125 (JP); Yamada, Akemi, Toyohashi-shi Aichi 441-8125 (JP)
(72) Inventor: Yamada, Osamu, Toyohashi-shi Aichi 441-8125 (JP); Yamada, Akemi, Toyohashi-shi Aichi 441-8125 (JP)
(74) Representative: Paget, Hugh Charles Edward
(86) International application number: PCT/JP2006/323569
(87) International publication number: WO 2007/083445

(57) **Abstract**

A plant growth-promoting and quality-improving agent is disclosed. The agent contains a water-insoluble inorganic micronutrient pulverized to a particle size of not more than a specified particle size, and is effective for a long period of time if applied a small number of times to a seed, a root, a nursery box, and a base of a plant. A method for promoting the growth and improving the quality of plants is also disclosed.

## Description

### TECHNICAL FIELD

The present invention relates to a method for promoting plant growth and improving plant quality, and a growth-promoting agent and a quality-improving agent to be used in the method. More particularly, the present invention relates to a method for promoting plant growth and improving plant quality which includes applying at least one finely-pulverized water-insoluble inorganic micronutrient to a plant, and a growth-promoting and quality-improving agent to be used in the method which contain at least one finely-pulverized water-insoluble inorganic micronutrient.

### BACKGROUND ART

As a method for applying a micronutrient which is indispensable for plant growth, a method of foliar application of a water-soluble micronutrient has been proposed (Patent Document 1). A method of adding a specific water-soluble micronutrient to a liquid fertilizer has also been proposed (Patent Document 2). Furthermore, a method of sustaining release of a water-soluble micronutrient by applying a water-permeable coating to the water-soluble micronutrient has been proposed (Patent Document 3). There has been no attempt to directly apply the water-insoluble inorganic material to a plant as a micronutrient.
[Patent Document 1] JP-A-06-024884
[Patent Document 2] JP-A-2001-240483
[Patent Document 3] JP-A-H07-053291

However, a method of foliar application usually requires applying chemicals diluted to a prescribed concentration every week. This is a problem in terms of both work efficiency and durability of the effect. Furthermore, when a specific water-soluble micronutrient is mixed with a liquid fertilizer or the like, there is a problem that durability of the effect cannot be expected due to movement of the micronutrient together with water into an area where the plant cannot reach. The method of sustaining release of a water-soluble micronutrient by coating with a water permeable coating still has many problems to be solved before being used in practice due to difficulty in controlling the water content in the applied object because the amount of moisture in the soil in agricultural fields significantly changes according to the meteorological conditions and the like.

Generally, a water-soluble fertilizer and a water-soluble inorganic micronutrient are easily absorbed from roots, stalks, leaves, and the like of plants and utilized. Therefore, it has been considered essential for fertilizers and micronutrients to dissolve in water. However, these fertilizers and micronutrients which are water-soluble have a drawback of runoff by rain and the like. Lack of micronutrients in the soil due to runoff of topsoil by rain or repeated cultivation causes crops to have various deficiency diseases, resulting in a decrease in harvest and quality. For this reason, it is necessary to supplement micronutrients by directly spraying a liquid fertilizer onto plants or to improve the soil. However, when directly applied to plants, the fertilizer is easily run off by sprinkled water or rain and, therefore, must be applied a number of times. In particular, in the foliar application of a liquid fertilizer, it is often difficult to obtain a continued effect unless the fertilizer is sprayed once a week, which requires enormous labor and expense. A sustained release fertilizer containing a micronutrient and chemical fertilizers such as nitrogen, phosphate, and potassium enveloped in a water-permeable resin film or the like has been developed. However, since the rate of release is affected by moisture in the environment and therefore easily influenced by a change in the meteorological conditions and the like, a desired effect is exhibited only with difficulty.

### DISCLOSURE OF THE INVENTION

The present invention has been achieved in view of the above problems of the related art, and has an object of providing a method for applying a micronutrient exhibiting a sufficient effect by being applied only a small number of times.
According to the present invention, a method for promoting plant growth and improving plant quality comprising applying at least one finely-pulverized water-insoluble inorganic micronutrient to a plant is provided. It is preferable that the water-insoluble inorganic micronutrient be at least one kind selected from the group consisting of tricalcium phosphate, manganese dioxide, calcium titanate, magnesium oxide, calcium silicate, and silicon dioxide, and have an average particle diameter of 10 µm or less. A flowable preparation containing a water-insoluble inorganic micronutrient with an average particle diameter of 5 µm or less is more preferable. As the application method, a method of coating seeds with the finely-pulverized water-insoluble inorganic micronutrient or a method of adding the finely-pulverized water-insoluble inorganic micronutrient to a plant cultivating medium is used. The term "plant cultivating medium" includes soil of course, a medium used in cultivation in facilities such as hydroponic culture, artificial cultivation soil used in a seedbed, a nursery box, and the like.

According to the present invention, a plant growth-promoting and quality-improving agent comprising at least one finely-pulverized water-insoluble inorganic micronutrient is provided. It is preferable that the water-insoluble inorganic micronutrient be at least one kind selected from the group consisting of tricalcium phosphate, manganese dioxide, calcium titanate, magnesium oxide, calcium silicate, and silicon dioxide, and have an average particle diameter of 10 µm or less. A flowable preparation containing a water-insoluble inorganic micronutrient with an average particle diameter of 5 µm or less is more preferable. The plant growth-promoting and quality-improving agent of the present invention may be a plant seed coating agent.

The following effects are provided by treating a plant with the product of the present invention. Production and growth of a root are actively promoted by applying the product of the present invention to seeds and roots of seedling. Flowers such as roses stay in bloom for a long period of time while maintaining freshness by applying the product of the present invention to cut flowers, potted flowers, and the like.
Flower roots can be actively grown and a greater number of flowers can be kept in bloom for a longer period of time by applying a diluted solution of the product of the present invention to potted flowers such as a cyclamen. The yield in rice or potato can be increased, and color, gloss, and taste of crops such as melon and tomato can be improved, and their sugar content can be increased by applying the product of the present invention to the base of the plant when planting. Replant failure caused by shortage of a micronutrient when the same crops have been grown for many years can be improved by treating the seeds or the nursery box with the product of the present invention or by applying the product of the present invention to the base of the plant.

### BEST MODE FOR CARRYING OUT THE INVENTION

Contrary to the established theory that inorganic fertilizers and trace elements required for plants must be soluble in water, the inventors of the present invention discovered that, if at least one water-insoluble inorganic micronutrient is pulverized and applied to a plant, healthy growth of the plant can be promoted for a long period of time and quality of the crops can be improved. As a result, the inventors successfully completed the present invention by providing a method for promoting quality of crops, and a healthy plant growth agent, a quality improving agent, or a plant growth regulator used in the method.

In the course of repeating various researches, the inventors of the present invention applied finely-pulverized water-insoluble inorganic micronutrients to the roots of a rice plant and observed the roots in detail by microscope. As a result, the inventors surprisingly found that the plant actively attracts the finely-pulverized particles around the roots and uses the water-insoluble inorganic micronutrient. Since this finding is quite different from the general knowledge that a water-insoluble inorganic micronutrient cannot be utilized by a plant, the inventors continued the detailed research using rice seeds, tomato seedlings, cucumber seedlings, sweet potato seedlings, and the like. As a result, it was confirmed that the water-insoluble inorganic micronutrient was definitely utilized by the plants. In addition, a treatment at a high concentration, which has generally been considered to be undesirable due to adverse effects on plant growth, was found to promote rooting and healthy growth of the plants without inducing phytotoxicity such as physiologic disorder.

As a result of further studies on the effective use for plants, it was found that it is preferable that the finely-pulverized water-insoluble inorganic micronutrient (hereinafter referred to as "product of the present invention") have an average particle diameter of 10 µm or less and that a powder with such an average particle diameter can be directly applied to plants. However, taking the effect on human bodies and environment into account, it is more preferable to wet-pulverize the water-insoluble inorganic micronutrient with a surfactant into a flowable preparation with an average particle diameter of 5 µm or less before applying to plants.

The product of the present invention is applied, as is, or after dilution, to a seed or a root of a plant, a nursery box, or a base of a plant when the seedling is planted.
Since the product of the present invention is not run off by sprinkled water, leaked water, rainfall, and the like, an amount needed by the plant can be utilized for a long period when required by the plant to continue healthy growth until cropping. As a result, it was found that qualities such as color, gloss, fragrance, sugar content of crops can be improved. A method of increasing the yield of rice, sweet potatoes, and the like was thus found, leading to attainment of the subject.

In the present invention, the term "plant growth promotion" refers not only to simple promotion of plant growth, but also to acceleration of rhizogenesis, life prolongation of cut flowers, and the like, of course, and further to inducing healthy and smooth growth inherently possessed by the plant The term "improvement" used in the present invention refers to improvement of quality, for example, an increase in yield of grains, leafy vegetables, and root vegetables, an increase in sugar content as well as improvement in fragrance and flavor of vegetables and fruits. In the case of flowering plants, "improvement" refers to the effect of promoting qualities of flowering plants such as increase in vividness of flowers.

In the present invention, the term "promoting plant growth and improving plant quality" used with the term "method" or "agent" refers to any one of a growth-promoting method or agent, a quality-improving method or agent, and a growth-promoting and quality-improving method or agent.

In the present invention, the term "water-insoluble inorganic micronutrient" refers to tricalcium phosphate, manganese dioxide, calcium titanate, magnesium oxide, calcium silicate, silicon dioxide, iron oxide, cobalt oxide, boric oxide, molybdenum oxide, aluminum oxide, calcium oxide, zinc oxide, and the like. These may be an independent chemial or a mineral containing any one of these compounds. As examples of the mineral, rock phosphate, manganese dioxide mineral, periclase, wollastonite, corundum, hematite, zincite, and the like can be given.

The term "pulverized" used in the present invention refers to a state of a substance of which the average particle diameter is reduced to 10 µm or less, and preferably 5 µm or less, by either wet pulverization or dry pulverization. An average particle diameter exceeding 10 µm is undesirable because the particles may not be sufficiently absorbed by the plant roots. The smaller the particle size, the better the effect. However, since expending too much time for pulverization does not necessarily increase absorption by plant roots, the lower limit of pulverization is usually around 1 µm. Wet pulverization is carried out in the presence of a surfactant which does not adversely affect plant growth and exhibits a sufficient wetting effect on the water-insoluble inorganic micronutrient. Dry pulverization is carried out using a jet mill. Powder may be applied to plants as is. However, from the viewpoint of preventing scattering, a flowable preparation made by wet pulverization in the presence of a suitable surfactant may be used. The content of the water-insoluble inorganic micronutrient in the flowable preparation is usually from 0.5 to 50% by mass, and preferably from 1 to 30% by mass and the content of the surfactant is from 0.5 to 15% by mass.

As the surfactant, nonionic surfactants such as a polyoxyalkylene alkyl aryl ether, polyoxyalkylene aryl aryl ether, polyoxyalkylene alkyl ether, polyoxyalkylene alkyl ester, sorbitan alkyl ester, polyoxyalkylene sorbitan alkyl ester, a copolymer of ethylene oxide and propylene oxide, and polyoxyethylene castor oil ether; a sulphate, a phosphate, or a salt of phosphate, of a polyoxyalkylene-type nonionic surfactant; anionic surfactants such as an alkylbenzenesulfonate, a higher alcohol sulphate, lignin sulfonate, naphthalenesulfonate or a salt of naphthalenesulfonate condensate, dialkylsulfosuccinate, soap, and a salt of sulphated olefin; cationic surfactants such as an amino acid and betaine surfactant, a higher alkylamine salt, a polyoxyalkylene higher alkylamine salt, an imidazoline, a quaternary ammonium salt can be given.
These surfactants may be used either individually or in combination of two or more.

In addition to a surfactant, additives such as an antifreezing agent, a thickener, an antifungal agent, and a defoaming agent which are commonly used adjutants may be added to the flowable preparation. As examples of the antifreezing agent, ethylene glycol, propylene glycol, and derivatives thereof can be given. As examples of the thickener, natural gums such as xanthan gum and gum arabic, synthetic polymers such as polyacrylate, polyvinyl alcohol, and carboxymethylcellulose, and fine powders of inorganic mineral such as magnesium aluminosilicate, acid clay, bentonite, smectite, and white carbon can be given.

As examples of the antifungal agent, generally used antifungal agents such as alkyl paraben, sorbitan acid and a salt thereof, benzoic acid and a salt thereof, dehydroacetic acid and a salt thereof, an isothiazole synthetic disinfectant can be given. As examples of the defoaming agent, generally used defoaming agents such as silicon-containing defoaming agents can be given.

These additives may be used in an amount sufficient for promoting plant growth taking into consideration the type of water-insoluble inorganic micronutrient used, the method of application, the type of target plants, and the like. A specific amount sufficient for promoting plant growth may be appropriately determined referring, for example, to the method of application and the amount used in the following experimental examples. As the method of application, the water-insoluble inorganic micronutrient may be applied, as is, or after dilution as required, by a generally used method of applying a vegetable nutrient to plants such as coating, dipping, drenching (soil drench), and spraying. For example, 1 kg of seeds is coated with about 30 ml of the flowable preparation (product of the present invention) or a solution obtained by dilution of the product of the present invention (equivalent to several milligrams to several grams as a solid component). Emulsion of a resin such as a vinyl acetate resin or a styrene-acrylate resin may be added in order to form a coating film. Cuttings of sweet potatoes dipped in an aqueous solution of the product of the present invention with a solid component of 2 to 20 ppm produce roots and the growth is accelerated in one to three weeks. Cut flowers such as rose are expected to exhibit extended life, if dipped in a 1 to 10 ppm aqueous solution. If the product of the present invention, as is, or a five to ten-fold diluted solution thereof is applied to a seeding box of rice or to a base of a seedling by soil drenching when planting (0.1 to 10g per bunch as a solid component), the yield of rice or potato can be increased and quality of melon or tomato can be improved, where their color and gloss can be improved and sugar content can be increased,. The term "plant" includes various decorative plants as well as agricultural crops and fruit trees.

### EXAMPLES

The present invention is described below in detail by way of examples.
However, the present invention should not be construed as being limited to the following examples.

### Example 1

Ninety grams of tricalcium phosphate, 6 g of "Sorpol 5082" (a mixture of polyoxyalkylene glycol sulphate, sodium ligninsulfonate, and naphthalenesulfonic acid formalin condensation polymer, manufactured by Toho Chemical Industry Co., Ltd.), 2 g of "Kunipia F" (aluminum silicate hydrate, manufactured by Kunimine Industries Co., Ltd.), and 0.3 g of a silicon defoaming agent "KM72" (manufactured by Shin-Etsu Chemical Co., Ltd.) were added to 152 ml of water. After adding 250 ml of ceramic beads with a diameter of 2 mm, the mixture was wet-pulverized at 2000 rpm for 20 minutes, followed by the addition of 21 ml of propylene glycol to obtain a 30% flowable preparation (product of the present invention). The average particle diameter of tricalcium phosphate in the preparation thus prepared was 4.5 µm.

### Example 2

Sixty grams of tricalcium phosphate, 4 g of "Sorpol 5082", 1.5 g of "Kunipia F", and 0.3 g of silicon defoaming agent "KM72" were added to 213 ml of water. After adding 250 ml of ceramic beads with a diameter of 2 mm, the mixture was wet-pulverized at 2000 rpm for 30 minutes, followed by the addition of 21 ml of propylene glycol to obtain a 20% flowable preparation (product of the present invention). The average particle diameter of tricalcium phosphate in the preparation thus prepared was 3.5 µm.

### Example 3

Thirty grams of tricalcium phosphate, 2 g of"Sorpol 5082", 1 g of "Kunipia F", and 0.3 g of a silicon defoaming agent "KM72" were added to 246 ml of water. After adding 250 ml of ceramic beads with a diameter of 2 mm, the mixture was wet-pulverized at 2000 rpm for 20 minutes, followed by the addition of 21 ml of propylene glycol to obtain a 10% flowable preparation (product of the present invention). The average particle diameter of tricalcium phosphate in the preparation thus prepared was 4.5 µm.

### Example 4

Ninety grams of calcium titanate, 6 g of "Sorpol 5082", 2 g of "Kunipia F", and 0.3 g of silicon defoaming agent "KM72" were added to 152 ml of water. After adding 250 ml of ceramic beads with a diameter of 2 mm, the mixture was wet-pulverized at 2000 rpm for 10 minutes, followed by the addition of 21 ml of propylene glycol to obtain a 30% flowable preparation (product of the present invention). The average particle diameter of calcium titanate in the preparation thus prepared was 9.35 µm.

### Example 5

Seventy-five grams of titanium dioxide, 3 g of "SANX P201" (sodium ligninsulfonate, manufactured by Nippon Paper Chemicals, Co., Ltd.), 1.6 g of "Kunipia F", and 0.3 g of a silicon defoaming agent "KM72" were added to 200 ml of water. After adding 250 ml of ceramic beads with a diameter of 2 mm, the mixture was wet-pulverized at 2000 rpm for 40 minutes, followed by the addition of 21 ml of propylene glycol to obtain a 25% flowable preparation (product of the present invention). The average particle diameter of titanium dioxide in the preparation thus prepared was 1.49 µm.

### Example 6

Thirty grams oftricalcium phosphate, 2 g of "Sorpol 5082", 1 g of "Kunipia F", and 0.3 g of a silicon defoaming agent "KM72" were added to 245 ml of water. After adding 250 ml of ceramic beads with a diameter of 2 mm, the mixture was wet-pulverized at 2000 rpm for 20 minutes. After gradually adding 0.5 g of xanthan gum while stirring, 21 ml of propylene glycol was added to obtain a 10% flowable preparation (product of the present invention). The average particle diameter of tricalcium phosphate in the preparation thus prepared was 4.5 µm.

### Example 7

Thirty grams of tricalcium phosphate, 1.5 g of "UFOXANE 3A" (sidium ligninsulfonate), 0.9 g of "Kunipia F", and 0.1 g of a silicon defoaming agent "KM72" were added to 264 g of water. After adding 250 ml of ceramic beads with a diameter of 2 mm, the mixture was wet-pulverized at 2000 rpm for 20 minutes. To the mixture, 1.2 g of cobalt chloride hexahydrate, 2.2 g of manganese chloride tetrahydrate, and 0.6 g of xanthan gum were gradually added while stirring to obtain a 10.3% flowable preparation (product of the present invention). The average particle diameter of tricalcium phosphate in the preparation thus prepared was 4.5 µm.

### Example 8

Two-hundred grams of water was added to 90 g of calcined bone powder and 1.5 g of "NEW CALUGEN WG-2" (Na salt of naphthalenesulfonic acid formalin condensate, manufactured by Takemoto Yushi Co., Ltd.). After adding 250 ml of ceramic beads with a diameter of 2 mm, the mixture was wet-pulverized at 2000 rpm for 7 minutes to obtain a premix. The average particle diameter of the calcined bone milled in the premix was 1.3 µm. Separately, 4.5 g of xanthan gum was gradually added to 284 g of water while stirring. After homogenizing, 11.2 g of Acticide MBS (a mixture of 2-methyl-4-isothiazolin-3-one and 1,2-benzisothiazolin-3-one) was added to obtain a 1.5 mass% solution ofxanthan gum. Six grams of the 1.5 mass% solution of xanthan gum was added to 30 g of the premix to obtain a 25% flowable preparation (product of the present invention). The average particle diameter of the calcined bone milled in the preparation thus obtained was 1.4 µm.

### Test Example 1

### Rice rhizogenesis test

Flowable preparations of water-insoluble inorganic micronutrient of calcium titanate, calcium silicate, manganese dioxide, or tricalcium phosphate, each obtained in the same manner as in Example 1 were added to 100 ml plastic cups containing 30 ml of water, to prepare solutions, each having a predetermined concentration. After washing away soils on rice seedlings grown to a 3.5 leaf stage, four seedlings were hydroponically cultivated in each of the water-insoluble inorganic micronutrients solutions, each having the predetermined concentration, to observe absorption of chemicals from the root, formation of the main root and side roots. Average values were evaluated after four days. Microscopic observation confirmed that rice positively gathered finely-pulverized chemicals around the roots and a number of new side roots had grown from the main root. Extension of the main root and production of side roots were particularly remarkable in manganese dioxide, calcium titanate, and tricalcium phosphate. The results are shown in Table 1.

**TABLE 1**

| Results of rice rhizogenesis test | | | | |
|---|---|---|---|---|
| | Concentration (ppm) | Main root length (cm) | Side roots length (mm) | Number of side roots |
| Untreated 1 | 0 | 5 | 1.2 | - |
| Untreated 2 | 0 | 5 | 1.2 | - |
| Manganese dioxide | 333 | 6.5 | 2.5 | Many |
| Calcium titanate | 333 | 7.0 | 2.5 | Many |
| Calcium silicate | 367 | 4.5 | 1.5 | Many |
| Tricalcium phosphate | 37 | 7.5 | 1.5 | Many |
| Tricalcium phosphate | 343 | 5.5 | 1.5 | Many |

### Test Example 2

### Cucumber cutting rhizogenesis test

Flowable preparations of water-insoluble inorganic micronutrient of calcium titanate, magnesium oxide, titanium dioxide, or tricalcium phosphate, each obtained in the same manner as in Example 1 were added to 200 ml plastic cups containing 100 ml of water, to prepare solutions, each having a predetermined concentration. Side vines grown to approximately the same degree were collected from a cucumber-growing field and cut to a length of about 15 cm. Two cuttings were put into each of the above predetermined solutions, with the cut end of the vines being in contact with the bottom of the cups, wherein the cucumbers were hydroponically grown at room temperature. On the fifth day, the plants were moved into fresh solutions in order to avoid the solutions go bad. After nine days, conditions of rhizogenesis were examined. The total root length was determined by adding up each length of all the roots growing from one vine. The average of the total root length of the two vines is shown in Table 2. Rhizogenesis acceleration effect was remarkable in calcium titanate, magnesium oxide, and tricalcium phosphate.

**TABLE 2**

| Results of cucumber rhizogenesis test | | |
|---|---|---|
| | Concentration (ppm) | Average of total root lengths (cm) |
| Untreated | 0 | 18.7 |
| Calcium titanate | 20 | 50.5 |
| Manganese oxide | 20 | 60.4 |
| Tricalcium phosphate | 6 | 26.0 |
| Tricalcium phosphate | 10 | 44.0 |
| Titanium dioxide | 12 | 18.2 |
| Titanium dioxide | 20 | 31.5 |

### Test Example 3

### Sweet potato cutting rhizogenesis test

The flowable tricalcium phosphate preparation obtained in Example 2 was added to 200 ml plastic cups, each containing 100 ml of water, to prepare solutions, each having a predetermined concentration. Seedlings grown to approximately the same degree were collected from a sweet potato-growing field and cut to a length of about 20 cm. Two to three cuttings were put into each of the above predetermined solutions, with the cut end of the vines being in contact with the bottom of the cup, wherein the sweet potatoes were hydroponically grown indoors at room temperature. On the fifth day, the plants were moved into fresh solutions in order to avoid the solutions go bad. After nine days, conditions of rhizogenesis were examined. The total root length was determined by adding up each length of all the roots growing from one vine. The average of the total root length of the two or three vines is shown in Table 3. Remarkable rhizogenesis acceleration effect of tricalcium phosphate was confirmed. New roots, which were not observed in untreated seedlings, were confirmed to grow from every main root treated with the product of the present inventions. About 20 to 40 side roots growing from one main root were observed. The results are shown in Table 3.

**TABLE 3**

| Results of sweet potato cutting rhizogenesis test | | |
|---|---|---|
| | Concentration (ppm) | Average of total root lengths (cm) |
| Untreated | 0 | 12.1 |
| Preparation of Example 2 | 2 | 216.0 |
| Preparation of Example 2 | 4 | 90.7 |
| Preparation of Example 2 | 6 | 106.5 |
| Preparation of Example 2 | 8 | 177.0 |
| Preparation of Example 2 | 10 | 320.8 |
| Preparation of Example 2 | 20 | 220.8 |

### Test Example 4

### Sweet potato cultivation test

The rooted sweet potato seedlings obtained in Example 3 (except for the untreated seedlings) were planted in ridges covered with a black plastic sheet at about 40 cm intervals (July 10). The preparations obtained in Examples 2 and 3 were respectively diluted tenfold and 100 ml of each diluted solution was applied to the base of the planted seedlings by soil drenching. After normal fertilization control and cultivation for about 50 days (November 20), sweet potatoes were harvested and weighed to determine the yield. The results are shown in Table 4. It can be seen that application of the product of the present invention to the base of the seedlings only once at the time of planting resulted in a remarkable harvest increase. This indicates that the product of the present invention was utilized by the plants over a long period of time.

**TABLE 4**

| Sweet potato harvest yield | | |
|---|---|---|
| | Concentration per plant (g) | Yield per plant (g) |
| Untreated 1 | 0 | 877 |
| Untreated 2 | 0 | 825 |
| Untreated 3 | 0 | 1008 |
| Untreated 4 | 0 | 838 |
| Untreated 5 | 0 | 857 |
| Untreated 6 | 0 | 505 |
| Preparation of Example 3 | 1 | 1972 |
| Preparation of Example 3 | 1 | 2084 |
| Preparation of Example 3 | 1 | 2046 |
| Preparation of Example 3 | 1 | 2209 |
| Preparation of Example 3 | 1 | 2244 |
| Preparation of Example 2 | 2 | 2618 |
| Preparation of Example 2 | 2 | 2597 |
| Preparation of Example 2 | 2 | 2946 |
| Preparation of Example 2 | 2 | 2767 |
| Preparation of Example 2 | 2 | 2206 |

### Test Example 5

### Melon cultivation test

Commercially-available melon seedlings (breed: *Makuwa*) were planted in ridges covered with a black plastic sheet at about 60 cm intervals. The preparations obtained in Examples 2 and 3 were diluted tenfold, and 100 ml of each diluted solution was applied to the base of the planted seedlings by soil drenching. After normal fertilization control and cultivation, the sugar content of the melons harvested from the middle of July was measured using a syrup hydrometer ("Nogyoya REF-113"). It was found that application of the product of the present invention to the base of the plant only once at the time of planting resulted in a remarkable increase in the sugar content of the harvested melons. That is, the harvested melons had a sugar content as high as that of netted melons. As a result of the flavor test, melons were found not only to have increased sweetness, but also exhibit natural scent and delicacy peculiar to the melons. The quality improved to the extent that the melons deserved only the word "delicious". The results indicate that the product of the present invention has been utilized by the plants over a long period of time. The results are shown in Table 5.

**TABLE 5**

| Sugar content of melons | | |
|---|---|---|
| | Concentration per plant (g) | Sugar content |
| Untreated 1 | 0 | 9.0 |
| Untreated 2 | 0 | 9.4 |
| Untreated 3 | 0 | 10.5 |
| Untreated 4 | 0 | 10.0 |
| Untreated 5 | 0 | 11.5 |
| Commercial product (same breed) | 0 | 8.1 |
| Preparation of Example 3 | 1 | 13.2 |
| Preparation of Example 3 | 1 | 14.5 |
| Preparation of Example 3 | 1 | 12.5 |
| Preparation of Example 3 | 1 | 13.5 |
| Preparation of Example 3 | 1 | 13.2 |
| Preparation of Example 2 | 2 | 14.0 |
| Preparation of Example 2 | 2 | 15.5 |
| Preparation of Example 2 | 2 | 14.0 |
| Preparation of Example 2 | 2 | 15.0 |
| Preparation of Example 2 | 2 | 14.0 |

### Test Example 6

### Hydrangea cutting rhizogenesis test

The preparation obtained in Example 2 was added to 200 ml plastic cups, each containing 100 ml of water, to prepare solutions, each having a predetermined concentration. New branches of *Hydrangea* were cut to a length of about 15 cm. Three cuttings were put into each of the above predetermined solutions, with the cut end of the stalks being in contact with the bottom of the cup, wherein the *Hydrangea* were hydroponically grown at room temperature. On the fifth day, the plants were moved into fresh solutions in order to avoid the solutions go bad. After 25 days, conditions of rhizogenesis were examined. The total root length was determined by adding up each length of all the roots growing from one cutting. The average of the total root length of the three cuttings is shown in Table 6. A rhizogenesis acceleration effect of tricalcium phosphate was confirmed.

**TABLE 6**

| Result of *Hydrangea* cutting rhizogenesis test | | |
|---|---|---|
| | Concentration (ppm) | Average of total root lengths (cm) |
| Untreated | 0 | 0 |
| Preparation of Example 2 | 4 | 7.2 |
| Preparation of Example 2 | 8 | 7.4 |

### Test Example 7

### Rice yield test

A predetermined amount of chemicals was weighed and embedded into soil together with roots of rice seedlings when the seedlings are planted in a paddy field in early May. The product of the present invention comprising tricalcium phosphate dry-pulverized to an average particle diameter of 6.13 µm was used as the test product. Nine bunches were planted per one test field. After that, usual wet-rice culture was carried out until harvesting in early October. The rice crop was dried and weighed to determine the yield. Good unhusked rice obtained by wind selection was used as the test sample. The average yield of nine bunches is shown in Table 7. As compared with common water-soluble fertilizers, the product of the present inventions showed more increase in the yield.

**TABLE 7**

| Yield of rice grown with calcium phosphates | | | |
|---|---|---|---|
| | Treated amount (g per 1 m²) | Average yield | |
| | | (g) | (%) |
| Untreated | 0 | 218 | (100) |
| Calcium dihydrogen phosphate (comparison) | 1 | 196 | (90) |
| Calcium dihydrogen phosphate (comparison) | 10 | 230 | (105) |
| Calcium hydrogen phosphate (comparison) | 1 | 203 | (93) |
| Calcium hydrogen phosphate (comparison) | 10 | 251 | (115) |
| Calcium superphosphate (comparison) | 10 | 224 | (103) |
| Tricalcium phosphate (product of the present invention) | 1 | 269 | (123) |
| Tricalcium phosphate (product of the present invention) | 10 | 268 | (123) |

| | | | |
|---|---|---|---|
| (Note: Calcium dihydrogen phosphate showed remarkable growth suppression at the beginning.) | | | |

### Test Example 8

### Seed potato treating test

Potatoes from varieties of *Danshaku* and *Kita Akari* were cut into halves so that each half could have almost the same number of buds. Cut potatoes were dipped in a 10% solution of the preparation obtained in Example 6 for one minute and dried for three days at room temperature. The treated potatoes were planted in a field with two rows of ridges, each having a width of 100 cm and being covered with a black plastic sheet, at 40 cm intervals and a depth of about 5 cm (March 21). After 100 days, new potatoes were dug out plant by plant to examine the yield. The results are shown in Tables 8 and 9.

**TABLE 8**

| Yield of potato (breed: *Danshaku*) | | | |
|---|---|---|---|
| Test plant number | Yield of potato treated with preparation of Example 6 (g) | Yield of potato treated with preparation of Example 7 (g) | Yield of potato from untreated plant (g) |
| 1 | 800 | 480 | 220 |
| 2 | 580 | 605 | 605 |
| 3 | 580 | 620 | 480 |
| 4 | 700 | 1350 | 420 |
| 5 | 930 | 810 | 540 |
| 6 | 605 | 1080 | 970 |
| 7 | 640 | None | 640 |
| 8 | 1440 | None | 510 |
| 9 | 805 | None | None |
| 10 | 1380 | None | None |
| Total | 8460 | 4945 | 4385 |
| Average per plant | 846 | 828 | 548 |
| Comparison with untreated plant | 154% | 151% | 100% |

| | | | |
|---|---|---|---|
| Potato (breed: *Danshaku*): Average yield increased 50% remarkably by treating the seed potatoes by dipping. | | | |

**TABLE 9**

| Yield of potato (breed: *Kita Akari*) | | | |
|---|---|---|---|
| Test plant number | Yield of potato treated with preparation of Example 6 (g) | Yield of potato treated with preparation of Example 7 (g) | Yield of potato from untreated plant (g) |
| 1 | 1100 | 1470 | 700 |
| 2 | 1040 | 830 | 580 |
| 3 | 990 | 850 | 1000 |
| 4 | 1150 | 850 | 420 |
| 5 | 980 | 760 | 960 |
| 6 | 1070 | 1050 | 1000 |
| 7 | 940 | 900 | None |
| 8 | 1380 | 990 | None |
| 9 | 1370 | 890 | None |
| 10 | 880 | 1060 | None |
| Total | 10900 | 9650 | 4660 |
| Average per plant | 1090 | 956 | 777 |
| Comparison with untreated plant | 140% | 124% | 100% |

| | | | |
|---|---|---|---|
| Potato (breed: *Kita Akari*): Average yield increased 20 to 40% remarkably by treating the seed potatoes by dipping. | | | |

### Test Example 9

### Soil treatment after potato planting

Seed potatoes of *Kita Akari* were planted in a 60 cm-wide ridge at intervals of 30 cm. To the planted potatoes, 100 ml of the preparation of Example 7 diluted to a predetermined concentration was applied by soil drenching (March 30). After 90 days, new potatoes were dug out plant by plant to examine the yield. The harvested potatoes were classified into seven groups according to the size to determine the rate of quality crops which are commercially valuable. The average starch value of the potatoes in each treatment condition was measured. The results are shown in Table 10.

**TABLE 10**

| Result of soil treatment after potato planting (breed: *Kita Akari*) | | | |
|---|---|---|---|
| Concentration of preparation of Example 7 | Average mass per plant (g) | Yield of quality crops (%) | Starch value (%) |
| 10-fold | 684 | 72.6 | 44.2 |
| 50-fold | 439 | 83.4 | 35.6 |
| 100-fold | 701 | 86.9 | 19.5 |
| 200-fold | 461 | 68.2 | 35.0 |
| Untreated plant | 529 | 64.3 | 14.5 |

| | | | |
|---|---|---|---|
| The yield of quality crops increased 10 to 30% and surprisingly starch value increased remarkably by soil treatment after planting. | | | |

### Test Example 10

### Watermelon treatment test at the time of transplanting

Watermelon (breed: *Matsuribayashi 777*) seedling pots were dipped in the preparation of Example 7 diluted to 20-fold when the seedlings were transplanted.
The seedlings were planted in a 180 cm-wide ridge at intervals of 90 cm. Alternatively, the preparation of Example 7 diluted to a predetermined fold was applied to the base of the plant in an amount of 100 ml per plant (May 2) without being previously treated by soil drenching. After normal cultivation for 79 days, during which two watermelons per plant were grown, the watermelons were harvested to measure the mass and the sugar content. The results are shown in Table 11.

**TABLE 11**

| Result of watermelon treatment test (breed: *Matsuribayashi 777*) | | | |
|---|---|---|---|
| Concentration of preparation of Example 7 | Treating method | Mass (g) | Average sugar content (%) |
| Diluted solution 10-fold | Soil drench 100 ml | 8,880 | 12.6 |
| | | 10,260 | 13.0 |
| | | Average: 9,570 | Average: 12.8 |
| Diluted solution 50-fold | Soil drench 100 ml | 7,840 | 13.0 |
| | | 5,680 | 11.6 |
| | | Average: 6,760 | Average: 12.3 |
| Diluted solution 20-fold | Pot dip | 6,980 | 12.0 |
| | | 6,200 | 12.2 |
| | | Average: 6,590 | Average: 12.1 |
| Untreated plant | - | 7,080 | 11.5 |
| | | 6,100 | 11.1 |
| | | Average: 6,760 | Average: 11.3 |

| | | | |
|---|---|---|---|
| As compared with the untreated plant, the plants treated with the flowable preparations of the present invention had an increase in their sugar content, enabling harvesting of high-grade watermelons with excellent sweetness. | | | |

### Test Example 11

### Sweet corn soil drenching test

Sweet corn (breed: *Miwakuno Corn*) was seeded in a 120 cm-wide ridge at intervals of 40 cm (March 20). The ridge was covered with a transparent plastic sheet to cultivate the sweet corn in a normal way. After about seven weeks, the plastic sheet was torn to draw out the grown plant. The preparation obtained in Example 7 were diluted to a predetermined fold and applied to the sweet corn in an amount of 100 ml/plant by soil drenching (April 27). Ripe sweet corn was harvested 56 days after the application (June 22) to measure the mass, total length, unripe rate, and sugar content. Average value of three measurements was determined. The results are shown in Table 12.

**TABLE 12**

| Result of sweet corn soil drenching test (breed: *Miwakuno Corn*) | | | | | |
|---|---|---|---|---|---|
| Concentration of preparation of Example 7 | Treating method | Mass (g) | Total length (cm) | Unripe rate (%) | Sugar content |
| 10-fold | Soil drench 100 ml | 353 | 165 | 3.03 | 17.3 |
| 50-fold | Soil drench 100 ml | 352 | 171 | 3.75 | 16.3 |
| 100-fold | Soil drench 100 ml | 335 | 167 | 3.32 | 16.3 |
| Untreated plant | - | 340 | 173 | 4.33 | 14.7 |

| | | | | | |
|---|---|---|---|---|---|
| As compared with the untreated plant, the plants treated with the flowable preparations of the present invention had a small unripe rate around their tips and a remarkable increase in their sugar content, enabling harvesting of high-grade sweet corns with excellent sweetness. | | | | | |

### Test Example 12

### Rice nursery box treating test

A 500 ml solution of the preparation of Example 7 diluted tenfold was applied uniformly by drenching the surface of soil of a nursery box immediately before rice seedlings grown in the nursery box were transplanted (May 10). The rice seedlings were planted with a rice planter. After 112 days of normal cultivation (August 30), rice was harvested and dried to measure the yield.

**TABLE 13**

| Rice nursery box treating test | | | | | | | | |
|---|---|---|---|---|---|---|---|---|
| Plant | Tested plant | | | | Untreated plant | | | |
| | Plant height (cm) | Stem length (cm) | Ear length (cm) | Number of ears | Plant height (cm) | Stem length (cm) | Ear length (cm) | Number of ears |
| 1 | 106.5 | 90 | 16.5 | 19 | 98.5 | 80 | 18.5 | 26 |
| 2 | 107 | 91 | 16 | 24 | 104 | 87 | 17 | 23 |
| 3 | 105.5 | 89 | 16.5 | 18 | 100 | 83 | 17 | 24 |
| 4 | 108 | 90 | 18 | 23 | 99 | 82 | 17 | 20 |
| 5 | 106 | 88 | 18 | 20 | 98.5 | 82 | 16.5 | 13 |
| 6 | 108 | 90 | 18 | 16 | 99 | 84 | 15 | 18 |
| 7 | 106 | 88 | 18 | 20 | 97 | 78 | 19 | 18 |
| 8 | 108 | 90 | 18 | 25 | 103 | 85 | 18 | 19 |
| 9 | 105 | 88 | 17 | 19 | 98 | 81 | 17 | 21 |
| 10 | 110 | 94 | 16 | 23 | 103 | 86 | 17 | 22 |
| Total | 1,070 | 898 | 172 | 207 | 1,000 | 828 | 172 | 204 |
| Average | 107 | 89.8 | 17.2 | 20.7 | 100 | 82.8 | 17.2 | 20.4 |
| Total weight of unhusked rice | 2,467 g (116%) | | | | 2,135 g (100%) | | | |
| Weight of good unhusked rice | 2,421.5 g (115%) | | | | 2,098.1 g (100%) | | | |
| Weight of unpolished rice | 1,999.8 g (115%) | | | | 1,734.9 kg (100%) | | | |
| Yield per 10 acres | 599.9 kg (9.99 bags) | | | | 520.5 kg (8.67 bags) | | | |
| Weight per 1000 grains of unpolished rice | 22.29 g | | | | 22.06 g | | | |

The rice yield increased by 15 % when 1 kg per 10 acres of the 10% flowable preparation of the present invention was applied to a rice nursery box before planting.
It is worthy of notice that the weight per 1000 grains of unpolished rice increased a little and quality was improved.

### INDUSTRIAL APPLICABILITY

The product of the present invention can constantly supply an amount of micronutrient necessary for a plant to grow by being applied once onto seeds or a base of a plant therefore the product of the present invention may be industrially used as follows. Regarding laborsaving in agriculture, since the product of the present invention needs to be applied only once to the seeds, to the nursery box, or when planting seedlings, weekly spraying of fertilizers or additional fertilization is unnecessary, leading to a reduction of labor and expense. Regarding healthy cultivation of crops, micronutrient deficiency and the like can be improved, leading to healthy cultivation. Regarding quality improvement or yield increase, the color, gloss, and sugar content of crops may be improved and yield may be increased. Cut flowers last longer, and roots of potted plants become active to have flowers grow healthy and stay in bloom longer. A system of stably growing and supplying high quality farm products may be built by applying the product of the present invention. Branding of these farm products may promote local industries and increase consumer choices.
Also, highly-functional food crops may be cultivated.

## Claims

1. A method for promoting plant growth and improving plant quality comprising applying at least one finely-pulverized water-insoluble inorganic micronutrient to a plant.

2. The method according to claim 1, wherein the water-insoluble inorganic micronutrient is at least one kind selected from the group consisting of tricalcium phosphate, manganese dioxide, calcium titanate, magnesium oxide, calcium silicate, and silicon dioxide, and has an average particle diameter of 10 µm or less.

3. The method according to claim 1 or 2, comprising applying a flowable preparation containing a water-insoluble inorganic micronutrient with an average particle diameter of 5 µm or less as the water-insoluble inorganic micronutrient.

4. The method according to any one of claims 1 to 3, comprising coating a seed with the at least one finely-pulverized water-insoluble inorganic micronutrient or adding the at least one finely-pulverized water-insoluble inorganic micronutrient to a plant cultivating medium.

5. A plant growth-promoting and quality-improving agent comprising at least one finely-pulverized water-insoluble inorganic micronutrient.

6. The plant growth-promoting and quality-improving agent according to claim 5, wherein the water-insoluble inorganic micronutrient is at least one kind selected from the group consisting of tricalcium phosphate, manganese dioxide, calcium titanate, magnesium oxide, calcium silicate, and silicon dioxide and has an average particle diameter of 10 µm or less.

7. The plant growth-promoting and quality-improving agent according to claim 5, the agent being a flowable preparation containing a water-insoluble inorganic micronutrient with an average particle diameter of 5 µm or less as the water-insoluble inorganic micronutrient.

8. The plant growth-promoting and quality-improving agent according to any one of claims 5 to 7, the agent being a plant seed coating agent.
